# EUROPEAN PATENT APPLICATION

(11) **EP 3 889 426 A1**
(43) Date of publication of application: **06.10.2021**
(21) Application number: 21165889.3
(22) Date of filing: 30.03.2021
(51) Int. Cl.: F03H 99/00, B64G 1/40

(54) **ELECTRICALLY CONTROLLED INTERFACIAL FORCE GENERATION DEVICE AND PROPULSION ENGINE**

(30) Priority: 31.03.2020 US 202016836217
(71) Applicant: The Boeing Company, Chicago, IL 60606 (US)
(72) Inventor: ATMUR, Robert J., Chicago 60606-1596 (US)
(74) Representative: Howson, Richard Giles Bentham

(57) **Abstract**

An electrically controlled interfacial force generation device includes a first electrode, a second electrode, and a cell disposed between the first electrode and the second electrode. The cell includes a material that produces a mass in response to a bias voltage being applied across the first electrode and the second electrode. The device also includes a first wall at one end of the cell and extending between the first electrode and the second electrode. The device further includes an electrical power supply configured to provide a variable gradient voltage across the first electrode and the second electrode. A variable electric field gradient is produced and altered within the cell in response to the variable gradient voltage being altered. Altering the variable electric field gradient causes the mass to propagate across the cell and to impact the first wall transferring a force to the first wall.

## Description

### BACKGROUND

The present disclosure relates generally to propulsion engines, and more particularly to an electrically controlled interfacial force generation device and a propulsion engine using the device.

Electric propulsion thrusters, such as Hall Effect thrusters (HET) or similar thrusters are used for propulsion of spacecraft, such as satellites or other space vehicles. The thrusters accelerate a propellant, such as Xenon or other propellant, during firing to generate thrust for propulsion of the spacecraft and to control movement in space. The amount of propellant used during firing of the thruster is determined by the amount of electric power supplied. The amount of electric power and propellant used will also be dependent upon the duration of firing of the thruster each time the thruster is fired. The amount of propellant a spacecraft is capable of carrying is limited. Therefore, the duration of a space mission will also be limited by the amount of fuel the spacecraft can carry.

### SUMMARY

In accordance with an example, an electrically controlled interfacial force generation device includes a first electrode and a second electrode. The device also includes a cell disposed between the first electrode and the second electrode. The cell includes a material that produces a mass of particles in response to a bias voltage being applied across the first electrode and the second electrode. The device also includes a first wall at one end of the cell and extending between the first electrode and the second electrode. The device further includes an electrical power supply configured to provide a variable gradient voltage across the first electrode and the second electrode. A variable electric field gradient is produced and altered within the cell in response to the variable gradient voltage being altered. Altering the variable electric field gradient causes the mass to propagate across the cell and to impact the first wall transferring a force to the first wall.

In accordance with another example, a propulsion engine includes a multiplicity of electrically controlled interfacial force generation devices. Each device includes a first electrode and a second electrode. Each device also includes a cell disposed between the first electrode and the second electrode. The cell includes a material that produces a mass in response to a bias voltage being applied across the first electrode and the second electrode. Each device also includes a first wall at one end of the cell and extending between the first electrode and the second electrode. Each device also includes an electrical power supply configured to provide a variable gradient voltage across the first electrode and the second electrode. A variable electric field gradient is produced and altered within the cell in response to the variable gradient voltage being altered. Altering the variable electric field gradient causes the mass to propagate across the cell and to impact the first wall transferring a force to the first wall.

In accordance with a further example, a method for generating a force includes producing a mass in a cell. The cell includes a material that produces the mass in response to a bias voltage being applied across a first electrode and a second electrode with the cell being disposed between the first electrode and the second electrode. The method also includes altering a variable electric field gradient within the cell by altering a variable gradient voltage applied across the first electrode and the second electrode. The method further includes generating a force by propagating the mass across the cell to impact a first wall. The impact of the mass transfers the force to the first wall. Altering the variable electric field gradient causes the mass to propagate across the cell and to impact the first wall.

In accordance with an example and any of the preceding examples, the variable electric field gradient is repeatedly altered to cause the mass to repeatedly impact the first wall to create a continuously moving force from the variable electric field gradient.

In accordance with an example and any of the preceding examples, the cell includes a superconductor material including a multiplicity of superconductor particles. The multiplicity of superconductor particles form the mass in response to the bias voltage being applied across the first electrode and the second electrode.

In accordance with an example and any of the preceding examples, the cell includes Bismuth Strontium Calcium Copper Oxide (BSCCO) material or a type-II superconductor material.

In accordance with an example and any of the preceding examples, the cell further includes a matrix material or a pocket configured to contain the superconductor material.

In accordance with an example and any of the preceding examples, the matrix material or the pocket is a material including characteristics compatible with cryogenic temperatures and the variable electric field gradient.

In accordance with an example and any of the preceding examples, the variable gradient voltage is altered between a first voltage level and a second voltage level to alter the variable electric field gradient.

In accordance with an example and any of the preceding examples, a surface tension of the mass is changed on one side in response to altering the variable electric field gradient by altering the variable gradient voltage between the first voltage level and the second voltage level. The surface tension altered on one side causes the mass to propagate across the cell in a particular direction.

In accordance with an example and any of the preceding examples, the variable gradient voltage is altered between the first voltage level and the second voltage level at a predetermined frequency.

In accordance with an example and any of the preceding examples, the predetermined frequency is about 700 Hertz.

In accordance with an example and any of the preceding examples, the first wall includes a non-conducting material. The non-conducting material includes characteristics compatible with cryogenic temperatures and the variable electric field gradient.

In accordance with an example and any of the preceding examples, the cell includes a tapered portion that tapers at the one end toward the first wall and the first electrode and the second electrode each include an angled segment that merge toward one another. The tapered portion of the cell is disposed between the angled segments of the first electrode and the second electrode to direct the mass at a particular location on the first wall.

In accordance with an example and any of the preceding examples, the device or each device also includes a switching mechanism configured to apply the bias voltage and the variable gradient voltage across the first electrode and the second electrode. The switching mechanism is further configured to alter the variable gradient voltage for altering the variable electric field gradient.

In accordance with an example and any of the preceding examples, the device or each device includes a second wall on an opposite end of the cell from the first wall. The switching mechanism is further configured to alter the variable gradient voltage for altering the variable electric field gradient within the cell to cause the mass to propagate across the cell in a first direction to impact the first wall and to create a first force in the first direction or to propagate in a second direction to impact the second wall and to create a second force in the second direction opposite the first direction.

The features, functions, and advantages that have been discussed can be achieved independently in various examples or may be combined in yet other examples further details of which can be seen with reference to the following description and drawings.

### BRIEF DESCRIPTION OF THE DRAWINGS

FIG. 1 is a block schematic diagram of an example of an electrically controlled interfacial force generation device in accordance with an example of the present disclosure.
FIG. 2 is an illustration of an example of a sequence of operation of an exemplary switching mechanism to cause a variable electric field gradient to propagate across a cell forcing a mass of particles to move in a particular direction in the cell in accordance with an example of the present disclosure.
FIG. 3 is an illustration of an example of a sequence of operation of the exemplary switching mechanism to cause a variable electric field gradient to propagate across a cell forcing a mass of particles to move in another particular direction in the cell in accordance with an example of the present disclosure.
FIG. 4 is a block schematic diagram of an example of an electrically controlled interfacial force generation device in accordance with another example of the present disclosure.
FIG. 5 is a block schematic diagram of an example of a spacecraft including a propulsion engine in accordance with an example of the present disclosure.
FIG. 6 is a block schematic diagram of another example of a spacecraft including a propulsion engine in accordance with an example of the present disclosure.
FIG. 7 is a flow chart of an example of a method for propulsion of a spacecraft in accordance with an example of the present disclosure.

### DETAILED DESCRIPTION

The following detailed description of examples refers to the accompanying drawings, which illustrate specific examples of the disclosure. Other examples having different structures and operations do not depart from the scope of the present disclosure. Like reference numerals may refer to the same element or component in the different drawings.

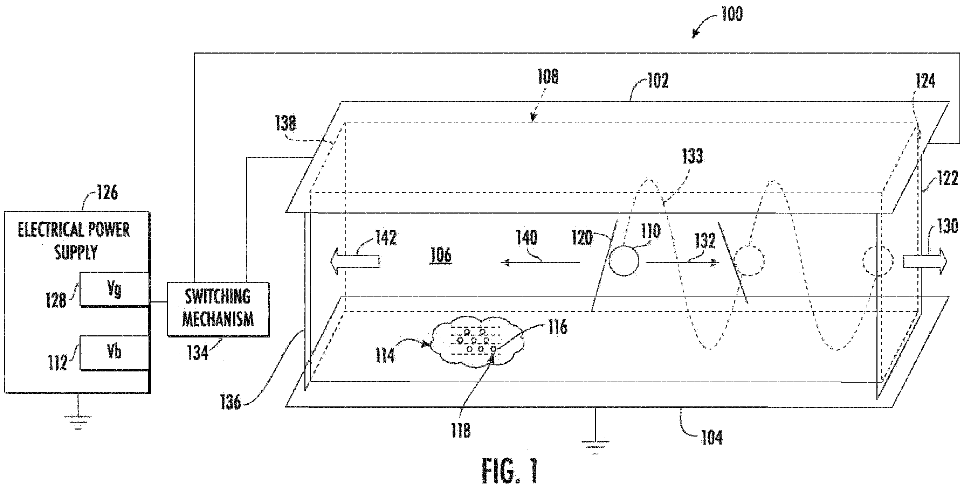

FIG. 1 is a block schematic diagram of an example of an electrically controlled interfacial force generation device 100 in accordance with an example of the present disclosure. The electrically controlled interfacial force generation device 100 includes a first electrode 102, a second electrode 104 and a cell 106 disposed between the first electrode 102 and the second electrode 104. The cell 106 includes a material 108 that produces mass 110 of particles 116 in response to a bias voltage (Vb) 112 being applied across the first electrode 102 and the second electrode 104. In accordance with an example, the material 108 is a superconductor material 114 including a multiplicity of superconductor particles 116. The multiplicity of superconductor particles 116 form the mass 110 in response to the bias voltage 112 being applied across the first electrode 102 and the second electrode 104. Examples of the superconductor material 114 of the cell 106 include but are not necessarily limited to Bismuth Strontium Calcium Copper Oxide (BSCCO) material or a type-II superconductor material. In accordance with an example, the mass 110 of particles 116 formed is substantially spherically-shaped. The mass 110 is substantially spherically-shaped in that the mass 110 when formed may not be perfectly spherical and may have a shape other than spherical.

In accordance with an example, the cell 106 further includes a matrix material 118 represented by broken lines in FIG. 1 or a pocket configured to contain the superconductor material 114. The matrix material 118 or the pocket is a material having characteristics compatible with cryogenic temperatures and a variable electric field gradient 120 produced across the cell 106 that causes the mass 110 to propagate across the cell 106 as described in more detail herein. An example of the matrix material 118 or the pocket includes but is not necessarily limited to polytetrafluoroethylene (PTFE) which is configured to capture the powdered superconductor material 114 for example by forming a pocket.

The electrically controlled interfacial device 100 also includes a first wall 122 at one end 124 of the cell 106. The first wall 122 extends between the first electrode 102 and the second electrode 104. The first wall 122 directly contacts the one end 124 of the cell 106. The first wall 122 includes a non-conducting material. The non-conducting material includes characteristics compatible with cryogenic temperatures and the variable electric field gradient 120 produced across the cell 106 that causes the mass 110 to propagate across the cell 106 as described herein. Examples of the wall material include but are not necessarily limited to PTFE or a similar material.

The electrically controlled interfacial device 100 further includes an electrical power supply 126 configured to provide a variable gradient voltage (Vg) 128 across the first electrode 102 and the second electrode 104. In accordance with an example, the electrical power supply 126 is also configured to provide the bias voltage 112. In another example, the bias voltage 112 is provided by a separate electrical power supply.

A variable electric field gradient 120 is produced and altered within the cell 106 in response to the variable gradient voltage 128 being altered between voltage levels. Altering the variable electric field gradient 120 causes the mass 110 to propagate across the cell 106 and to impact the first wall 122 transferring a force 130 represented by the arrow in FIG. 1 to the first wall 122. The variable electric field gradient 120 is repeatedly altered to cause the mass 110 to repeatedly impact the first wall 122 to create a continuously moving force 130 from the variable electric field gradient 120. The variable gradient voltage 128 is altered between a first voltage level and a second voltage level to alter the variable electric field gradient 120. A surface tension of the mass 110 is changed on one side in response to altering the variable electric field gradient 120 by altering the variable gradient voltage 128 between the first voltage level and the second voltage level. The surface tension being altered on one side of the mass 110 causes the mass 110 to propagate across the cell 106 in a particular direction 132. As the variable gradient voltage 128 is altered between the first voltage level and the second voltage level, the mass 110 propagates across the cell 106 along an oscillating path 133 between the first electrode 102 and the second electrode 104 as illustrated by the broken or dash line in FIG. 1.

The variable gradient voltage 128 is altered between the first voltage level and the second voltage level at a predetermined frequency. In accordance with an example, the predetermined frequency is about 700 Hertz.

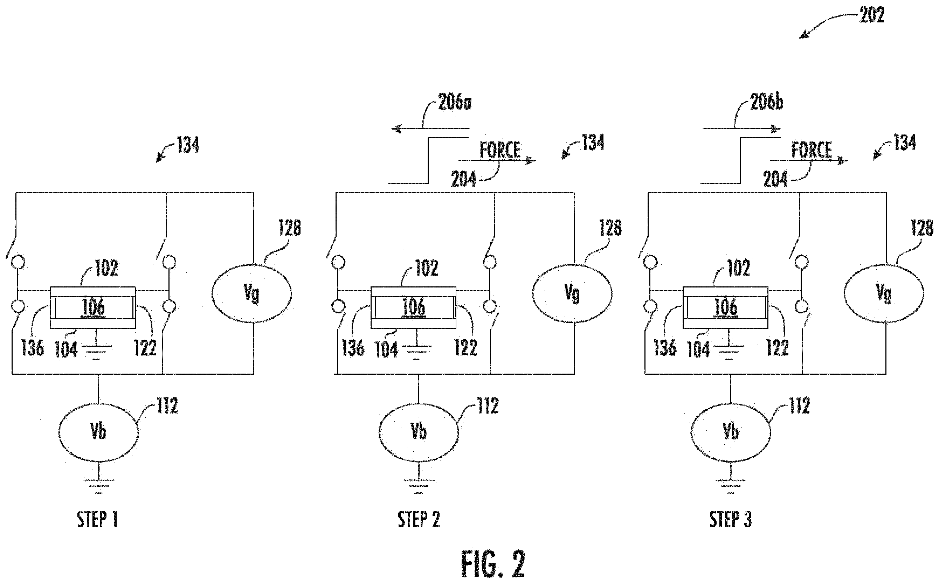

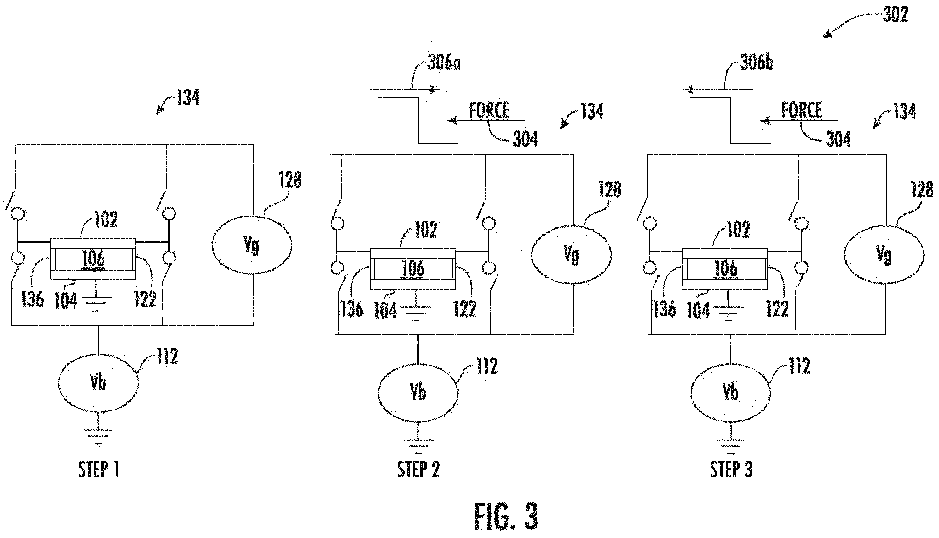

In accordance with an example, the electrically controlled interfacial force generation device 100 includes a switching mechanism 134 configured to apply the bias voltage 112 and the variable gradient voltage 128 across the first electrode 102 and the second electrode 104. The switching mechanism 134 is further configured to alter the variable gradient voltage 128 for altering the variable electric field gradient 120. An example of the switching mechanism 134 and an example of a sequence of operation of the exemplary switching mechanism 134 to cause the variable electric field gradient 120 to propagate across the cell 106 and force the mass 110 of superconductor particles 116 to move in a particular direction in the cell 106 will be described with reference to FIGS. 2 and 3. The switching mechanism 134 is configured to alter or switch the variable gradient voltage 128 between the first voltage level and the second voltage as described with reference to FIGS. 2 and 3. In accordance with the example in FIG. 1, the switching mechanism 134 is a separate component from the electrical power supply 126. In accordance with another example, the switching mechanism 134 is incorporated in the electrical power supply 126.

In accordance with an example, the electrically controlled interfacial force generation device 100 includes a second wall 136 on an opposite end 138 of the cell 106 from the first wall 122. The second wall 136 is in contact with the opposite end 138 of the cell 106. The second wall 136 includes a non-conducting material. In accordance with an example, the second wall 136 includes the same material as the first wall 122.

The switching mechanism 134 is further configured to alter the variable gradient voltage 128 for altering the variable electric field gradient 120 within the cell 106 to cause the mass 110 of superconductor particles 116 to propagate across the cell 106 in a first direction 132 to impact the first wall 122 and to create a first force 130 in the first direction 132, or to cause the mass 110 to propagate in a second direction 140 to impact the second wall 136 and to create a second force 142 in the second direction 140 opposite the first direction 132.

FIG. 2 is an illustration of an example of a sequence of operations 202 of an exemplary switching mechanism 134 to cause a variable electric field gradient 120 to propagate across a cell 106 forcing a mass 110 of particles 116 to move in a particular direction in the cell 106 as indicated by the force arrow 204. In the example in FIG. 2, the particular direction of movement of the mass 110 of particles 116 is to the right.

In step 1, the cell 106 is biased by applying the bias voltage 112 across the first electrode 102 and the second electrode 104. In step 2, the cell 106 is charged to the gradient voltage 128 by applying the gradient voltage 128 to the first and second electrodes 102 and 104. Charging the cell 106 to the gradient voltage 128 drives the variable electric field gradient 120 (FIG. 1) across the cell 106. In step 3, the cell 106 is discharged to reverse the gradient direction as illustrated by arrows 206a in Step 2 and 206b in Step 3. A force is generated in the direction of force arrow 204 to drive the mass 110 of particles 116 across the cell 106 in the direction of the force arrow 204. Steps 2 and 3 are repeated to continuously drive the mass 110 of particles 116 across the cell 106 until the mass 110 impacts the first wall 122 imparting the force 204 on the first wall 122. In the example in FIG. 2, the first voltage level is the cell 106 charged to the gradient voltage 128 and the second voltage level is the cell 106 discharged or zero gradient voltage 128.

FIG. 3 is an illustration of an example of a sequence of operation 302 of the exemplary switching mechanism 134 to cause a variable electric field gradient 120 to propagate across a cell 106 forcing a mass 110 of particles 116 to move in another particular direction in the cell 106 as indicated by the force arrow 304. In the example in FIG. 3, the particular direction of movement of the mass 110 of particles 116 is to the left.

In step 1, the cell 106 is biased by applying the bias voltage 112 across the first electrode 102 and the second electrode 104. In step 2, the cell 106 is charged to the gradient voltage 128 by applying the gradient voltage 128 to the first and second electrodes 102 and 104. Charging the cell 106 to the gradient voltage 128 drives the variable electric field gradient 120 (FIG. 1) across the cell 106. In step 3, the cell 106 is discharged to reverse the gradient direction as illustrated by arrows 306a in Step 2 and 306b in Step 3. A force is generated in the direction of force arrow 304 to drive the mass 110 of particles 116 across the cell 106 in the direction of the force arrow 304. Steps 2 and 3 are repeated to continuously drive the mass 110 of particles 116 across the cell 106 until the mass 110 impacts the second wall 136 imparting the force 304 on the second wall 136. In the example in FIG. 3, the first voltage level is the cell 106 charged to the gradient voltage 128 and the second voltage level is the cell 106 discharged or zero gradient voltage 128.

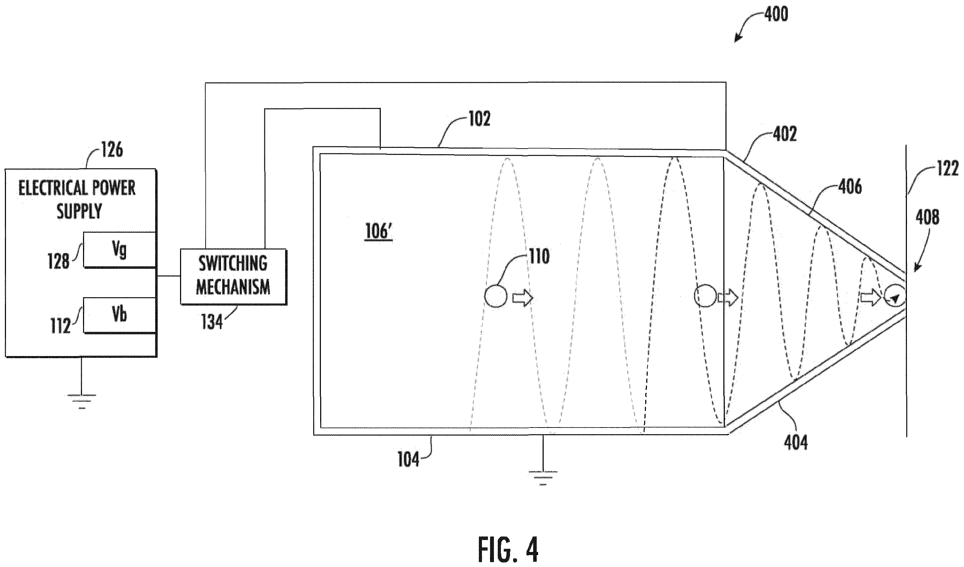

FIG. 4 is a block schematic diagram of an example of an electrically controlled interfacial force generation device 400 in accordance with another example of the present disclosure. The electrically controlled interfacial force generation device 400 is similar to the electrically controlled interfacial force generation device 100 in FIG. 1. The electrically controlled interfacial force generation device 400 includes a cell 106' similar to the cell 106 in FIG. 1. However, the cell 106' includes a tapered potion 406 that tapers at one end toward the first wall 122. Additionally, the first electrode 102 and the second electrode 104 each include an angled segment 402 and 404, respectively, that merge toward one another. The tapered portion 406 of the cell 106' is disposed between the angled segments 402 and 404 of the first electrode 102 and the second electrode 104 to direct the mass 110 at a particular location 408 on the first wall 122.

In accordance with another example, the cell 106' includes another tapered portion at an opposite end of the cell' 106 from the tapered portion 406 and the electrodes 102 and 104 include angled segments that extend parallel to the other tapered portion of the cell 106'. The other tapered portion is configured to direct the mass 110 at a particular location on a second wall, such as second wall 136 in FIG. 1.

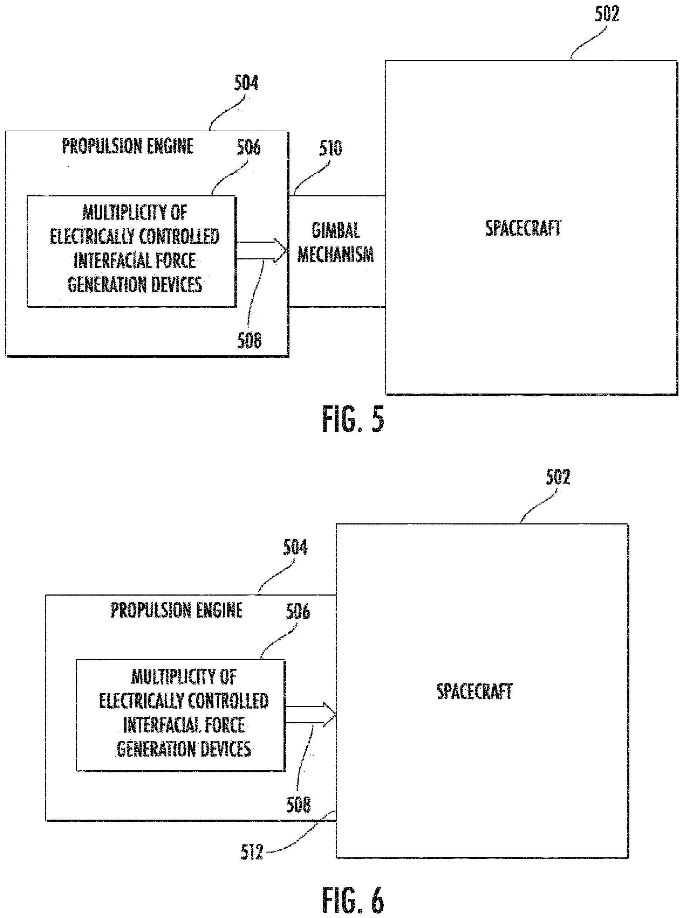

FIG. 5 is a block schematic diagram of an example of a spacecraft 502 including a propulsion engine 504 in accordance with an example of the present disclosure. The propulsion engine 504 includes a multiplicity of electrically controlled interfacial force generation devices 506. In accordance with an example, the electrically controlled interfacial force generation device 100 in FIG. 1 is used for each of the multiplicity of electrically controlled interfacial force generation devices 506. In accordance with another example, the electrically controlled interfacial force generation device 400 in FIG. 4 is used for each of the multiplicity of electrically controlled force generation devices 506.

The propulsion engine 504 is coupled to the spacecraft 502 to apply a force 508 from the multiplicity of electrically controlled interfacial force generation devices 506 to the spacecraft 502 for propulsion of the spacecraft 502. In accordance with an example, the electrical power supply 126 and switching mechanism 134 (FIGS. 1 and 4) are electrically connected in parallel to each of the electrically controlled interfacial force generation devices 506 so that the force 130 is imparted to the wall 122 (FIGS. 1 and 4) of each of the electrically controlled interfacial force generation devices 506 simultaneously to create a combined force 508 for propulsion of the spacecraft 502.

In accordance with the example in FIG. 5, the propulsion engine 504 is coupled to the spacecraft 502 by a gimbal mechanism 510 to control a direction by which the force 508 is applied to the spacecraft 502.

FIG. 6 is a block schematic diagram of an example of a spacecraft 502 including a propulsion engine 504 in accordance with another example of the present disclosure. In the example in FIG. 6, the propulsion engine 504 is directly connected to the spacecraft 502 to apply the force 508 directly to the spacecraft 502. In accordance with an example, the electrically controlled interfacial force generation devices 506 are directly connected to the spacecraft 502 without the wall 122 in FIG. 1. Accordingly, the wall 122 in FIG. 1 is replaced by an exterior wall 512 of the spacecraft 502.

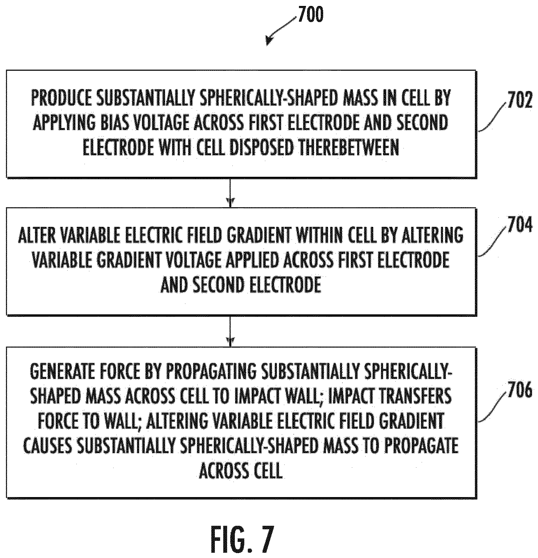

FIG. 7 is a flow chart of an example of a method 700 for propulsion of a spacecraft 502 in accordance with an example of the present disclosure. In accordance with an example, the method 700 is embodied in and performed by the device 100 in FIG. 1 or the device 400 in FIG. 4. In block 702, a mass 110 is produced in a cell 106. In accordance with an example, the mass 110 is substantially spherically-shaped. The cell 106 includes a material 108 that produces the mass 110 in response to a bias voltage 112 being applied across a first electrode 102 and a second electrode 104 with the cell 106 being disposed between the first electrode 102 and the second electrode 104.

In block 704, a variable electric field gradient 120 is altered within the cell 106 by altering a variable gradient voltage 128 applied across the first electrode 102 and the second electrode 104.

In block 706, a force 130 is generated by propagating the mass 110 across the cell 106 to impact a first wall 122. The impact of the substantially spherically-shaped mass 110 transfers the force 130 to the first wall 122. Altering the variable electric field gradient 120 causes the mass 110 to propagate across the cell 106 and to impact the first wall 122.

The flowchart and block diagrams in the Figures illustrate the architecture, functionality, and operation of possible implementations of systems, methods, and computer program products according to various examples of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular examples only and is not intended to be limiting of examples of the disclosure. As used herein, the singular forms "a", "an" and "the" are intended to include the plural forms as well, unless the context clearly indicates otherwise. It will be further understood that the terms "include," "includes," "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present examples has been presented for purposes of illustration and description, but is not intended to be exhaustive or limited to examples in the form disclosed. Many modifications and variations will be apparent to those of ordinary skill in the art without departing from the scope and spirit of examples.

The disclosure comprises the subject matter described in the following clauses:
Clause 1. An electrically controlled interfacial force generation device, the device comprising: a first electrode; a second electrode; a cell disposed between the first electrode and the second electrode, the cell comprising a material that produces a mass of particles in response to a bias voltage being applied across the first electrode and the second electrode; a first wall at one end of the cell and extending between the first electrode and the second electrode; and an electrical power supply configured to provide a variable gradient voltage across the first electrode and the second electrode, wherein a variable electric field gradient is produced and altered within the cell in response to the variable gradient voltage being altered, altering the variable electric field gradient causes the mass to propagate across the cell and to impact the first wall transferring a force to the first wall.
Clause 2. The device of Clause 1, wherein the variable electric field gradient is repeatedly altered to cause the mass to repeatedly impact the first wall to create a continuously moving force from the variable electric field gradient.
Clause 3. The device of Clause 1 or 2, wherein the cell comprises a superconductor material comprising a multiplicity of superconductor particles, wherein the multiplicity of superconductor particles form the mass in response to the bias voltage being applied across the first electrode and the second electrode.
Clause 4. The device of Clause 3, wherein the cell comprises Bismuth Strontium Calcium Copper Oxide (BSCCO) material or a type-II superconductor material.
Clause 5. The device of Clause 3 or 4, wherein the cell further comprises a matrix material or a pocket configured to contain the superconductor material.
Clause 6. The device of Clause 5, wherein the matrix material or the pocket is a material comprising characteristics compatible with cryogenic temperatures and the variable electric field gradient.
Clause 7. The device of any of Clauses 1-6, wherein the variable gradient voltage is altered between a first voltage level and a second voltage level to alter the variable electric field gradient.
Clause 8. The device of Clause 7, wherein a surface tension of the mass is changed on one side in response to altering the variable electric field gradient by altering the variable gradient voltage between the first voltage level and the second voltage level, wherein the surface tension being altered on one side causes the mass to propagate across the cell in a particular direction.
Clause 9. The device of Clause 7 or Clause 8, wherein the variable gradient voltage is altered between the first voltage level and the second voltage level at a predetermined frequency.
Clause 10. The device of Clause 9, wherein the predetermined frequency is about 700 Hertz.
Clause 11. The device of any of Clauses 1-10, wherein the first wall comprises a non-conducting material, the non-conducting material comprising characteristics compatible with cryogenic temperatures and the variable electric field gradient.
Clause 12. The device of any of Clauses 1-11, wherein the cell comprises a tapered portion that tapers at the one end toward the first wall and the first electrode and the second electrode each include an angled segment that merge toward one another, the tapered portion of the cell being disposed between the angled segments of the first electrode and the second electrode to direct the mass at a particular location on the first wall.
Clause 13. The device of any of Clauses 1-12, further comprising a switching mechanism configured to apply the bias voltage and the variable gradient voltage across the first electrode and the second electrode, wherein the switching mechanism is further configured to alter the variable gradient voltage for altering the variable electric field gradient.
Clause 14. The device of Clause 13, further comprising a second wall on an opposite end of the cell from the first wall, wherein the switching mechanism is further configured to alter the variable gradient voltage for altering the variable electric field gradient within the cell to cause the mass to propagate across the cell in a first direction to impact the first wall and to create a first force in the first direction or to propagate in a second direction to impact the second wall and to create a second force in the second direction opposite the first direction.
Clause 14a. A method for generating a force using the device of any preceding Clause.
Clause 14b. The method of Clause 14a, comprising the steps of the method of Clause 20.
Clause 15. A propulsion engine, comprising: a multiplicity of electrically controlled interfacial force generation devices, each device comprising: a first electrode; a second electrode; a cell disposed between the first electrode and the second electrode, the cell comprising a material that produces a mass in response to a bias voltage being applied across the first electrode and the second electrode; a first wall at one end of the cell and extending between the first electrode and the second electrode; and an electrical power supply configured to provide a variable gradient voltage across the first electrode and the second electrode, wherein a variable electric field gradient is produced and altered within the cell in response to the variable gradient voltage being altered, altering the variable electric field gradient causes the mass to propagate across the cell and to impact the first wall transferring a force to the first wall.
Clause 16. The propulsion engine of Clause 15, wherein the propulsion engine is coupled to a spacecraft to apply the force from the multiplicity of electrically controlled interfacial force generation devices to the spacecraft for propulsion of the spacecraft.
Clause 17. The propulsion engine of Clause 15 or 16, wherein the cell comprises a superconductor material comprising a multiplicity of superconductor particles, wherein the multiplicity of superconductor particles form the mass in response to the bias voltage being applied across the first electrode and the second electrode.
Clause 18. The propulsion engine of Clause 17, wherein the cell further comprises a matrix material or a pocket configured to contain the superconductor material.
Clause 19. The propulsion engine of any of Clauses 15-18, further comprising a switching mechanism configured to apply the bias voltage and the variable gradient voltage across the first electrode and the second electrode, wherein the switching mechanism is further configured to alter the variable gradient voltage for altering the variable electric field gradient.
Clause 20. A method for generating a force, comprising: producing a mass in a cell, the cell comprising a material that produces the mass in response to a bias voltage being applied across a first electrode and a second electrode with the cell being disposed between the first electrode and the second electrode; altering a variable electric field gradient within the cell by altering a variable gradient voltage applied across the first electrode and the second electrode; and generating a force by propagating the mass across the cell to impact a first wall, the impact of the mass transferring the force to the first wall, the altering the variable electric field gradient causing the mass to propagate across the cell and to impact the first wall.
Clause 21. The method of Clause 20, wherein the force is generated using the device of any of Clauses 1-14, or the propulsion engine of any of Clauses 15-19.

Although specific examples have been illustrated and described herein, those of ordinary skill in the art appreciate that any arrangement which is calculated to achieve the same purpose may be substituted for the specific examples shown and that the examples have other applications in other environments. This application is intended to cover any adaptations or variations. The following claims are in no way intended to limit the scope of examples of the disclosure to the specific examples described herein.

## Claims

1. An electrically controlled interfacial force generation device (100), the device (100) comprising:
a first electrode (102);
a second electrode (104);
a cell (106) disposed between the first electrode (102) and the second electrode (104), the cell (106) comprising a material (108) that produces a mass (110) of particles (116) in response to a bias voltage (112) being applied across the first electrode (102) and the second electrode (104);
a first wall (122) at one end (124) of the cell (106) and extending between the first electrode (102) and the second electrode (104); and
an electrical power supply (126) configured to provide a variable gradient voltage (128) across the first electrode (102) and the second electrode (104), wherein a variable electric field gradient (120) is produced and altered within the cell (106) in response to the variable gradient voltage (128) being altered, altering the variable electric field gradient (120) causes the mass (110) to propagate across the cell (106) and to impact the first wall (122) transferring a force (130) to the first wall (122).

2. The device (100) of claim 1, wherein the variable electric field gradient (120) is repeatedly altered to cause the mass (110) to repeatedly impact the first wall (122) to create a continuously moving force (130) from the variable electric field gradient (120).

3. The device (100) of claim 1 or 2, wherein the cell (106) comprises a superconductor material (114) comprising a multiplicity of superconductor particles (116), wherein the multiplicity of superconductor particles (116) form the mass (110) in response to the bias voltage (112) being applied across the first electrode (102) and the second electrode (104).

4. The device (100) of claim 3, wherein the cell (106) comprises Bismuth Strontium Calcium Copper Oxide (BSCCO) material or a type-II superconductor material.

5. The device (100) of claim 3 or 4, wherein the cell (106) further comprises a matrix material (118) or a pocket configured to contain the superconductor material (114).

6. The device (100) of claim 5, wherein the matrix material (118) or the pocket is a material (108) comprising characteristics compatible with cryogenic temperatures and the variable electric field gradient (120).

7. The device (100) of any preceding claim, wherein the variable gradient voltage (128) is altered between a first voltage level and a second voltage level to alter the variable electric field gradient (120).

8. The device (100) of claim 7, wherein a surface tension of the mass (110) is changed on one side in response to altering the variable electric field gradient (120) by altering the variable gradient voltage (128) between the first voltage level and the second voltage level, wherein the surface tension being altered on one side causes the mass (110) to propagate across the cell (106) in a particular direction (132).

9. The device (100) of claim 7 or 8, wherein the variable gradient voltage (128) is altered between the first voltage level and the second voltage level at a predetermined frequency.

10. The device (100) of any preceding claim, wherein the first wall (122) comprises a non-conducting material, the non-conducting material comprising characteristics compatible with cryogenic temperatures and the variable electric field gradient (120).

11. The device (100) of any preceding claim, wherein the cell (106) comprises a tapered portion (406) that tapers at the one end toward the first wall (122) and the first electrode (102) and the second electrode (104) each include an angled segment (402) that merge toward one another, the tapered portion (406) of the cell (106) being disposed between the angled segments (402) of the first electrode (102) and the second electrode (104) to direct the mass (110) at a particular location (408) on the first wall (122).

12. The device (100) of any preceding claim, further comprising a switching mechanism (134) configured to apply the bias voltage (112) and the variable gradient voltage (128) across the first electrode (102) and the second electrode (104), wherein the switching mechanism (134) is further configured to alter the variable gradient voltage (128) for altering the variable electric field gradient (120).

13. The device (100) of claim 12, further comprising a second wall (136) on an opposite end (138) of the cell (106) from the first wall (122), wherein the switching mechanism (134) is further configured to alter the variable gradient voltage (128) for altering the variable electric field gradient (120) within the cell (106) to cause the mass (110) to propagate across the cell (106) in a first direction (132) to impact the first wall (122) and to create a first force (130) in the first direction (132) or to propagate in a second direction (140) to impact the second wall (136) and to create a second force (142) in the second direction (140) opposite the first direction (132).

14. A propulsion engine (504), comprising:
a multiplicity of the electrically controlled interfacial force generation devices (100) of any preceding claim.

15. A method (700) for generating a force (130), comprising:
producing (702) a mass (110) in a cell (106), the cell (106) comprising a material (108) that produces the mass (110) in response to a bias voltage (112) being applied across a first electrode (102) and a second electrode (104) with the cell (106) being disposed between the first electrode (102) and the second electrode (104);
altering (704) a variable electric field gradient (120) within the cell (106) by altering a variable gradient voltage (128) applied across the first electrode (102) and the second electrode (104); and
generating (706) a force (130) by propagating the mass (110) across the cell (106) to impact a first wall (122), the impact of the mass (110) transferring the force (130) to the first wall (122), the altering (704) the variable electric field gradient (120) causing the mass (110) to propagate across the cell (106) and to impact the first wall (122).
